Europäisches Patentamt

European Patent Office

Office européen des brevets

(19)

(11) Veröffentlichungsnummer: **0 207 409**
**B1**

(12) **EUROPÄISCHE PATENTSCHRIFT**

(45) Veröffentlichungstag der Patentschrift:
07.02.90

(51) Int. Cl.⁴: **F16F 9/46**

(21) Anmeldenummer: 86108485.3

(22) Anmeldetag: 21.06.86

(54) Ventilsystem für steurbare, hydraulische Schwingungsdämpfer.

(30) Priorität: 02.07.85 DE 3523628

(43) Veröffentlichungstag der Anmeldung:
07.01.87 Patentblatt 87/2

(45) Bekanntmachung des Hinweises auf die Patenterteilung:
07.02.90 Patentblatt 90/6

(84) Benannte Vertragsstaaten:
DE FR GB IT

(56) Entgegenhaltungen:
EP-A- 0 174 119
EP-A- 0 196 030
DE-B- 1 021 653
FR-A- 2 301 737
GB-A- 2 159 917
JP-A-57 173 629
NL-C- 97 561
US-A- 2 695 034
US-A- 3 421 606
US-A- 3 568 711

W. BEITZ et al.: "TASCHENBUCH
MASCHINENBAU", 14. Auflage, 1981, Springer, Berlin,
DE

(73) Patentinhaber: Bayerische Motoren Werke
Aktiengesellschaft, Patentabteilung
AJ-3 Postfach 40 02 40 Petuelring 130,
D-8000 München 40(DE)

(72) Erfinder: Müller, Rudi, Mühlstrasse 12,
D-8081 Egenhofen(DE)
Erfinder: Rötsch, Karl, Finkenweg 26,
D-8908 Krumbach(DE)

**Beschreibung**

Die Erfinung bezieht sich auf ein Ventylsystem für steuerbare, hydraulische Schwingungsdämpfer, insbesondere für Teleskopstoßdämpfer nach dem Oberbegriff der nebengeordneten Hauptansprüche 1, 6 und 9.

Ein derartiges Ventilsystem in einem Stoßdämpfer zeigt die DE-B 1 580 775. Der offene Durchflußkanal durchzieht eine Dämpfungszwischenwand und trifft auf die mittig eingespannte Scheibenfeder eines Sitzventils. Der Bypass-Kanal verläuft teilweise in einem Steuerschiebergehäuse und mündet mit seinem letzten, in der Dämpfungszwischenwand vorgesehenen Abschnitt in den Durchflußkanal. Über einen Steuerschieber läßt sich der Bypass-Kanal verschließen.

Je nachdem, ob der Steuerschieber den Bypass-Kanal freigibt oder verschließt, weist der Stoßdämpfer ein weicheres oder härteres Dämpfungsverhalten auf. Dabei bestimmt sich die Variationsbreite im wesentlichen nach den Durchflußquerschnitten der Kanäle. Der vorbekannte Stoßdämpfer ist für bestimmte Anwendungsfälle nicht brauchbar, da bei ihm das Dämpfungsverhalten nur im unteren Kolbengeschwindigkeitsbereich ausreichend variiert werden kann. Bei hohen Kolbengeschwindigkeiten (Bereich der Rad-Eigenfrequenz), bei denen die Dämpfkräfte im wesentlichen durch das federbelastete Sitzventil bestimmt werden, bleiben die Dämpfkraft-Kennlinien weitgehend unbeeinflußt. Eine wirksame Komfortverbesserung kann nur erreicht werden, wenn die Kennlinien auch in diesem Geschwindigkeitsbereich variiert werden können.

Bekannt sind auch verstellbare Stoßdämpfer, bei denen zu einem ständig wirksamen Sitzventil wahlweise ein zweites federbelastetes Ventil parallel geschaltet werden kann. Der Nachteil dieser Ausführung ist der nahezu doppelt so große Platzbedarf im Vergleich zu den heute verwendeten Dämpferkolben.

Ein weiterer verstellbarer Stoßdämpfer ist aus der nach Artikel 54 (3) EPÜ älteren europäischen Anmeldung EP-A 174 119 bekannt. Hier ist im Dämpfungskolben ein Ventilsystem vorgesehen mit mehreren Durchflußkanälen, die wahlweise über eine Steuerscheibe verschlossen werden können. Je nach Stellung der Steuerscheibe erhält der Stoßdämpfer eine härtere oder weichere Kennung. Dieses so veränderbare Ventilsystem wirkt aber nur in der Druckstufe. Für die Zugstufe ist ein Durchflußkanal vorgesehen, der von der Steuerscheibe nicht beeinflußt wird. Dieser älteren Anmeldung fehlt demnach ein stets offener Durchflußkanal, der im Wechselspiel mit den verschließbaren Kanälen die Härte des Stoßdämpfers bestimmt.

In einem Stoßdämpfer sind nur sehr beengte Platzverhältnisse gegeben. Das Ventilsystem muß demnach kompakt aufgebaut sein. Das gilt vor allem dann, wenn das Ventilsystem im Dämpferkolben vorgesehen sein soll.

Aufgabe der Erfindung ist es, ein gattungsgemäßes Ventilsystem so weiterzubilden, daß es bei kompakter Bauweise eine verhältnismäßig große konstruktive Freiheit für die Auslegung des Dämpfungsverhaltens erlaubt.

Die Aufgabe wird erfindungsgemäß in dreierlei Hinsicht gelöst, nämlich durch die kennzeichnenden Merkmale der Ansprüche 1, 6 und 9.

Die getrennte Führung der beiden Kanäle eröffnet die Möglichkeit, die Auftreffstelle des Bypass-Kanals auf das Sitzventil unabhängig von der des Druckflußkanales zu wählen, um unterschiedliche Dämpferwirkungen zu erzielen. Außerdem kann der Austrittsquerschnitt des jeweiligen Kanals im Bereich des Sitzventils unterschiedlich ausgelegt sein. Durch diese Wahlmöglichkeiten ergibt sich für den Konstrukteur ein größerer Spielraum für die Auslegung des Ansprech- und Dämpfungsverhalten des Schwingungsdämpfers.

Dazu kommt ein weiterer Vorteil. Die Ventilsysteme der Schwingungsdämpfer weisen, insbesondere wenn sie als Stoßdämpfer für Kraftfahrzeuge verwendet werden, in der Regel einen sogenannten Konstantdurchfluß auf. Dieser Konstantdurchfluß weist, wie sich aus dem Namen schon ergibt, einen konstanten Durchflußquerschnitt auf und ermöglicht einen Austausch der Dämpfungsflüssigkeit zwischen den Arbeitskammern am Sitzventil vorbei. Bei gebräuchlichen Stoßdämpferausführungen ist der Konstantdurchfluß im Bereich des Sitzventils vorgesehen. Dabei ist der Ventilsitz so ausgearbeitet, daß das Ventil nicht in der Lage ist vollständig zu schließen. Bei der erfindungsgemäßen Ausführung kann nun dem Durchflußkanal und dem Bypass-Kanal ein solcher Konstantdurchfluß zugeordnet werden. Dadurch ergibt sich ein weiterer Spielraum für die konstruktive Auslegung bzw. Anpassung an den jeweiligen Anwendungsfall.

Soweit im Rahmen dieser Anmeldung von einem Durchflußkanal und einem Bypass-Kanal gesprochen wird, schließt das nicht aus, daß in einem Ventilsystem mehrere Kanäle der gleichen Art vorgesehen sind.

In einer erfindungsgemäßen Ausführung wird das Verschlußorgan durch eine außermittig angeordnete Schraubenfeder beaufschlagt. Der Durchflußkanal und der Bypass-Kanal treffen in unterschiedlich radial wirksamen Abständen auf das Verschlußorgan. Aufgrund der dadurch erzielten Hebelverhältnisse bewirkt die Dämpfungsflüssigkeit im radial äußeren Kanal bei gleichem Durchflußquerschnitt schon bei einem geringeren Druck das Abheben des Federpakets vom Ventilsitz. Verschließt das Schieberventil den Bypass-Kanal, so erhält man die harte Einstellung des Stoßdämpfers. Bei geöffnetem Schieberventil bewirkt der Bypass-Kanal eine weiche Dämpfungscharakteristik.

Die Variation der radial wirksamen Abstände kann noch mit einer unterschiedlichen Anzahl von Kanälen der gleichen Art innerhalb des Systems kombiniert werden. Darüber hinaus lassen sich unterschiedliche Durchflußquerschnitte der einzelnen Kanäle verwirklichen. Mit jeder Kombination erhält die Konstruktion eine andere Abstufung der harten und weichen Einstellung des Stoßdämpfers. Besonders vorteilhaft hat sich eine Ausführung gezeigt, bei der im Mündungsbereich der Bypass-Kanal sich zu einer großen Austrittsöffnung erweitert. Durch die physikalischen Gesetzmäßigkeiten von Druck, Kraft und Fläche ergibt sich im Rahmen der Variation der unterschiedlichen Durchflußquerschnitte die weitere Möglichkeit, bei einem im wesentlichen sehr engen Kanalquerschnitt an der Austrittsstelle einen großen Druckquerschnitt zu verwirklichen. .

In einer weiteren, erfindungsgemäßen Ausführung ist das Verschlußorgan aufgeteilt in zwei topfförmige Bauteile und jedem dieser Bauteile ist ein Kanal, Durchfluß- oder Bypass-Kanal zugeordnet. Die beiden Bauteile werden von einer Druckfeder beaufschlagt. Vorteilhafter jedoch ist es, jedem Bauteil eine getrennte Druckfeder zuzuordnen. Auf diese Weise erhält man die Möglichkeit, unterschiedliche Federraten miteinander kombinieren zu können und damit unterschiedliche Einstellungen des Dämpfungsverhaltens zu erreichen. Darüber hinaus können diese Druckfedern bei entsprechender Ausgestaltung des Verschlußorgans in Serie oder parallel geschaltet sein.

Bei einer dritten Ausführung der Erfindung ist ein Ventilsystem mit mehreren Stufen versehen. Zu diesem Zweck trennt sich der Bypass-Kanal in zwei getrennte Kanäle auf, die einzeln von dem Schieberventil verschlossen werden können. Dadurch erhält man eine erste, harte Einstellung des Schwingungsdämpfers, wenn beide Kanäle des Bypass-Kanals geschlossen sind. Bei einer zweiten, mittleren Einstellung öffnet der Steuerschieber einen der beiden Bypass-Kanäle. Und schließlich sind bei der dritten, weichen Einstellung beide Bypass-Kanäle geöffnet.

Neben all diesen konstruktiven Möglichkeiten erlaubt die Erfindung auch eine kompakte Bauweise, beispielsweise bei einem mit dem Ventilsystem ausgerüsteten Dämpferkolben. In einer vorteilhaften Ausführung ist in diesem Fall das gesamte Ventilsystem innerhalb des Dämpferkolbens angeordnet.

Schließlich erlaubt die Erfindung neben der Einstellung verschiedener Härtestufen des Schwingungsdämpfers auch ein unterschiedliches Dämpfungsverhalten in der Zug- und Druckstufe. Hierfür ist in einer vorteilhaften Ausführung ein Nebenarm des Bypass-Kanales in einer der Stufen, in der Regel in der Zugstufe durch ein Rückschlagventil geschlossen. In der Druckstufe öffnet dann dieses Rückschlagventil und läßt die Dämpfungsflüssigkeit unter Umgehung des Sitzventils durch den Nebenarm des Bypass-Kanals zurück in die zweite Arbeitskammer fließen.

Weitere vorteilhafte Ausgestaltungen der Erfindung ergeben sich aus der nachfolgenden Beschreibung mehrerer Ausführungsbeispiele und der dazu gehörigen Zeichnung. Es zeigen

Fig. 1 ein Diagramm mit Dämpfungskennlinien;
Fig. 2 einen Zweirohr-Teleskop-Stoßdämpfer, bei dem ein nach dem Stand der Technik im wesentlichen bekanntes Ventilsystem sowohl im Dämpferkolben als auch als Bodenventil verwirklicht ist;
Fig. 3 einen Dämpfungskolben eines Teleskopstoßdämpfers mit einem außermittig angeordneten federbelasteten Sitzventil;
Fig. 4 zwei Ausführungsbeispiele, die links und rechts der Mittellinie dargestellt sind und

Fig. 5 ein Ausführungsbeispiel, das drei Einstellungsstufen erlaubt.

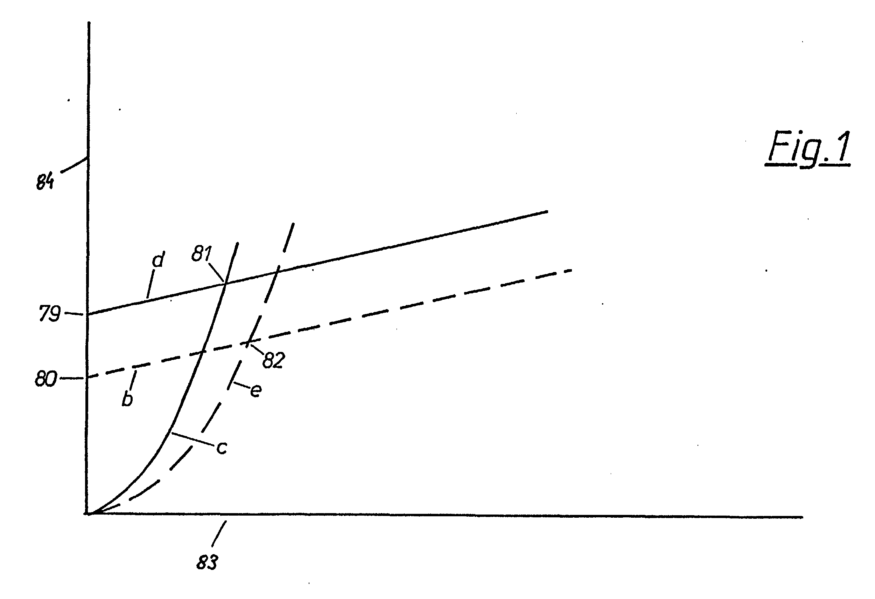

Der Kurvenverlauf nach Fig. 1 ist im Anschluß an die Figurenbeschreibung erläutert. Außerdem tragen in den einzelnen Ausführungsbeispielen die sich einander gleichenden Bauteile die gleichen Bezugszeichen.

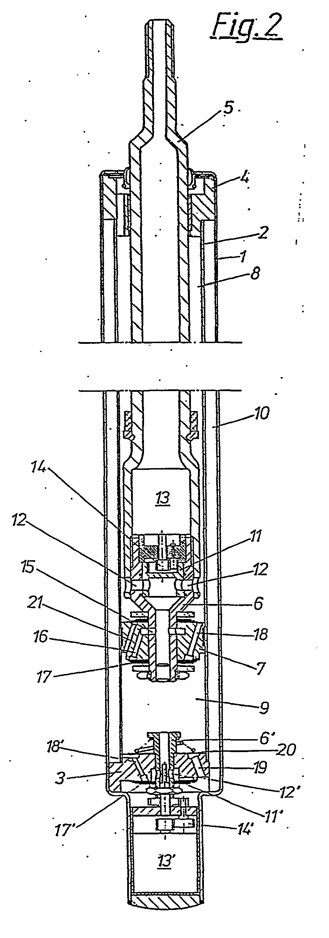

Fig. 2 läßt einen steuerbaren, hydraulischen Schwingungsdämpfer erkennen, wie er üblicherweise bei Radaufhängungen von Kraftfahrzeugen verwendet wird. Der Stoßdämpfer weist ein äußeres Mantelrohr 1 und ein konzentrisch darin angeordnetes inneres Mantelrohr 2 auf. Die beiden Mantelrohre 1 und 2 sind durch ein Bodenteil 3 und einem Verschlußstück 4 miteinander verbunden. In seinem Inneren nimmt das Mantelrohl 2 eine hohle Kolbenstange 5 auf, die an ihrem eingetauchten Ende über ein an ihr befestigtem, hülsenförmigem Zwischenstück 6 einen Dämpferkolben 7 trägt. Der Dämpferkolben 7 trennt den Innenraum des Mantelrohres 2 in eine erste Arbeitskammer 8 und eine zweite Arbeitskammer 9. Außerdem bildet sich zwischen dem äußeren Mantelrohr 1 und dem inneren Mantelrohr 2 eine Ausgleichskammer 10 aus.

Die Kolbenstange 5 bzw. der Dämpfungskolben 7 sind einmal geführt an der Innenwandung des Mantelrohres 2 und zum anderen im Verschlußstück 4. Schließlich füllt ein hydraulisches Dämpfungsmedium die Arbeitskammern 8 und 9 teilweise auch die Ausgleichskammer 10 aus. Soweit beschrieben, handelt es sich um einen herkömmlichen Stoßdämpfer, eine noch genauere Beschreibung bedarf es deshalb nicht.

Innerhalb des Zwischenstückes 6 sitzt axial verdrehbar eine Steuerhülse 11, die zusammen mit dem Zwischenstück 6 bzw. dem Mantel der Kolbenstange 5 ein Schieberventil bildet. Zu diesem Zweck weisen die Bauteile an ihren Wandungen korrespondierende Querbohrungen 12 auf, die den Durchfluß von Dämpfungsflüssigkeit von der Arbeitskammer 8 über den Dämpferkolben 7 zur Arbeitskammer 9 ermöglichen. Durch Verdrehen verschließt die Steuerhülse 11 diese Querflußbohrungen 12. Dabei geschieht dies über einen ebenfalls in der Kolbenstange angeordneten Stellmotor 13, der über ein Untersetzungsgetriebe 14 auf die Steuerhülse 11 wirkt.

An dem Zwischenstück 6 ist an einem unteren, abgesetzen und rohrförmigen Abschnitt der Dämpferkolben 7 befestigt. Dabei führt eine Durchtrittsöffnung 15 in der Wandung des Zwischenstücks 6 zu einem Kanal 16, der innerhalb des Dämpferkolbens 7 schräg nach unten und außen verläuft. Er mündet auf ein federbelastetes Sitzventil 17, das aus einem mittig eingespannten Scheibenfederpaket besteht. Auf der anderen Seite durchzieht ein weiterer Durchflußkanal 18 den Dämpferkolben 7. Dieser Durchflußkanal 18 öffnet sich in Richtung der Arbeitskammer 8 und trifft ebenso wie der Kanal 16 auf das Federpaket des Sitzventils 17, allerdings in einem geringeren radialen Abstand zur Einspannstelle.

Die Querbohrungen 12 und die Durchtrittsöffnung 15 sowie der Weg zwischen ihnen bilden in dem Zwischenstück 6 und der Kanal 16 den Bypass-Kanal, während der Kanal 18 als der offene Durchflußkanal anzusehen ist. Das so beschriebene Ventilsystem arbeitet, wie noch näher dargelegt, in der Zugstufe, also wenn die Kolbenstange 5 nach oben gezogen wird.

Ein ähnliches Ventilsystem ist im Bodenteil 3 vorgesehen für die Druckstufe. Es ist wieder eine entsprechende Steuernadel 11' erkennbar, die sich über einen Motor 13' und Getriebe 14' axial verdrehen läßt. Außerdem geben Querbohrungen 12' in der Hülse 6' den Weg zu einem Sitzventil 17' frei. Auf dieses Sitzventil 17' wirkt schließlich auch ein vergleichbarer Durchflußkanal 18'.

Eine nicht näher dargestellte Auswertelektronik steuert den Stellmotor 13, durch den die Steuerhülse 11 entweder die Querbohrungen 12 freigibt oder verschließt. Bei verschlossenen Querbohrungen 12 weist der Stoßdämpfer seine harte Einstellung auf. Wird in diesem Fall die Kolbenstange 5 herausgezogen, fließt über den offenen Durchflußkanal 18 Dämpfungsflüssigkeit von der Arbeitskammer 8 in die Arbeitskammer 9. Um das Sitzventil 17 zu öffnen, bedarf es eines bestimmten Druckes der Dämpfungsflüssigkeit, der wiederum von der Geschwindigkeit abhängt, mit der der Dämpfungskolben 17 nach oben gezogen wird.

Diese Schwelle wird gesenkt, wenn die Steuerhülse 11 die Querbohrungen 12 freigibt. Dann fließt außer im dem Durchflußkanal 18 auch Dämpfungsflüssigkeit durch den Bypass-Kanal und trifft am Ende des Kanalstücks 16 ebenfalls auf die Sitzfeder 17, allerdings in einem größeren radialen Abstand zur Einspannstelle. Durch den sich daraus ergebenden größeren Hebelarm vermag die Dämpfungsflüssigkeit im Bypass-Kanal das Abheben des Federpakets schon bei einem geringeren Druck zu bewirken. Außerdem ergibt sich ein größerer Öffnungsspalt, so daß insgesamt mehr Dämpfungsflüssigkeit austreten kann. Der Stoßdämpfer ist in diesem Zustand weicher, er kann also schon bei kleineren Flüssigkeitsdrücken reagieren.

In der Zugstufe saugt der Stoßdämpfer außerdem durch die sich ergebende Volumenvergrößerung der Arbeitskammer 9 Dämpfungsflüssigkeit aus der Ausgleichskammer 10 über das Bodenventil in diese Arbeitskammer 9 hinein. Die Dämpfungsflüssigkeit fließt dabei durch einen Kanal 19, der ebenfalls auf ein mittig eingespanntes Scheibenfederpaket 20 führt. Dieser Durchfluß ist, wie die Fig. 2 zeigt, in seinem Volumenstrom nicht veränderbar. Es handelt sich dabei um herkömmliches Rückflußventil.

In der Druckstufe steuert das Ventilsystem in dem Bodenteil den Stoßdämpfer, d. h. je nachdem, ob die Steuernadel 11' die Durchflußöffnungen 12' freigibt oder verschließt, nimmt der Stoßdämpfer eine härtere oder weichere Charakterisik an. Das Ventilsystem arbeitet entsprechend dem in dem Dämpferkolben 7. Ergänzend sei in diesem Zusammenhang noch auf einen Kanal 21 im Dämpferkolben 7 hingewiesen, der wiederum über ein federbelastetes Sitzventil herkömmlicher Art den Austausch von Dämpfungsflüssigkeit zwischen den Arbeitskammern 9 und 8 während der Druckstufe ermöglicht.

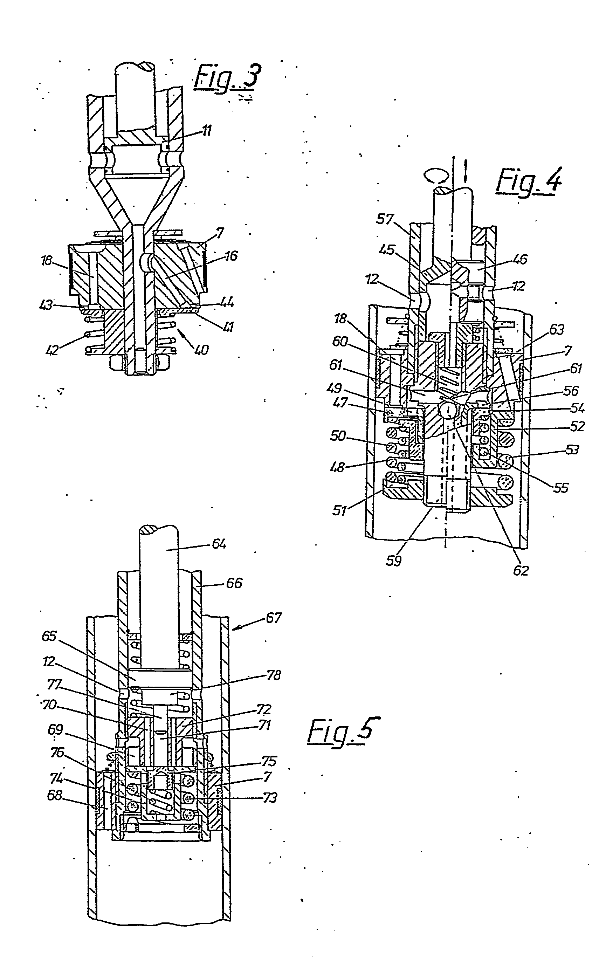

Das Ventilsystem nach Fig. 2 weist wenigstens im Bereich des Sitzventils 17 bzw. 17' auch einen Konstantdurchfluß auf, der jedoch im Zusammenhang mit Fig. 3 näher beschrieben wird.

Die Ausführung nach Fig. 3 ist mit der nach Fig. 2 vergleichbar. Der wesentliche Unterschied besteht in der Ausbildung des Sitzventils, das hier mit 40 bezeichnet ist. Das Sitzventil 40 besteht aus einer außermittig angeordneten Ventilplatte 41, die eine Druckfeder 42 gegen ihren Sitz an der Unterseite des Ventilkörpers 7 preßt. Durch die außermittige Anordnung erhält man wiederum einen vergleichsweise kleinen, radialen Abstand des hier senkrecht angeordneten Durchflußkanales 18 zu der Kraftwirkungslinie der Druckfeder 42. Der schräg nach unten laufende Kanal 16, als Teil des Bypass-Kanals, mündet dagegen in einem größeren, radialen Abstand auf die Ventilplatte 41. Durch diese Anordnung erhält man wieder eine harte Einstellung wenn die Steuerhülse 11, die hier mit einem Schaft verbunden ist, den Bypass versperrt und eine weiche Einstellung, wenn sie ihn freigibt.

Zwischen der Austrittsöffnung des Durchflußkanals 18 und der Oberseite der Ventilplatte 41 ist eine nicht verschließbare Konstantdurchflußöffnung 43 vorgesehen. Eine ähnliche Durchflußöffnung 44 bildet sich zwischen dem Kanal 16 und der Ventilplatte 41 aus.

Diese Konstantdurchflüsse 43, 44 ermöglichen einen Durchsatz von Dämpfungsflüssigkeit auch dann, wenn das Sitzventil bzw. die Ventilplatte 41 noch nicht abgehoben hat. Dadurch wird erreicht, daß selbst bei geringen Kräften der Dämpfungskolben 7 bereits Dämpfungsflüssigkeit über diese Konstantdurchflüsse 43, 44 verdrängen und sich somit nach oben bewegen kann. Durch die wahlweise Möglichkeit des Öffnen oder Verschließen des Bypass-Kanales kann auch die Durchflußmenge der Dämpfungsflüssigkeit variiert werden. Damit läßt das Ventilsystem auch schon eine härtere und weichere Einstellung zu bei Kolbengeschwindigkeiten, bei denen das Sitzventil 40 noch nicht geöffnet hat.

Fig. 4 beinhaltet zwei Ausführungsbeispiele, die sich jedoch weitgehend gleichen. Die hauptsächlichen Unterschiede bestehen darin, daß das Schieberventil, das den Bypass-Kanal schließt, auf der linken Bildhälfte als Drehschieber 45 und auf der rechten Bildhälfte als Axialschieber 46 ausgebildet ist. Das Verschlußorgan des Sitzventiles ist in beiden Ausführungen in zwei ineinander angeordnete, topfförmige Bauteile getrennt, die teleskopartig gegeneinander verschiebbar sind. Dabei übergreift das innere Bauteil 47 der linken Ausführung in radialer Richtung mit einem als Ventilplatte dienenden Flansch das äußere Bauteil 48. Außerdem weist dieser Flanschabschnitt eine auf einen Kragen des äußeren Bauteils 48 zielende Durchtrittsöffnung 49 auf. Außerdem stützt sich das innere Bauteil 47 mit seinem das äußere Bauteil 48 übergreifenden Randabschnitt an einer Schraubenfeder 50 ab, während der Kragenabschnitt des äußeren Bauteils 48 über eine Schraubenfeder 51 gegen die Unterseite des Flanschteiles des inneren Bauteils 47 gedrückt wird und dadurch die Durchtrittsöffnung 49 verschließt.

Bei den topfförmigen Bauteilen der rechten Ausführung wird das äußere Bauteil 52 durch eine Druckfeder 53 gegen die Unterseite des Dämpfungskolbens 7 gedrückt. Das innere Bauteil 54 stützt sich dagegen über eine Druckfeder 55 am äußeren Bauteil 52 ab. Außerdem verschließt dieses Bauteil 54 einen Kanalabschnitt 56 des noch näher darzustellenden Bypass-Kanales.

Der Bypass-Kanal im Sinne der Erfindung wird wiederum gebildet durch Querbohrungen 12 in der Wandung einer hohlen Kolbenstange 57 und durch entsprechende Öffnungen in dem Drehschieber 45 bzw. einem aus Quer- und Axialbohrung gebildeten Kanalabschnitt 58 in dem Axialschieber 46. Ein Endstück 59, das in die Kolbenstange 57 eingeschraubt ist, bildet mit einer zentralen Durchgangsbohrung 60 einen weiteren Abschnitt des Bypass-Kanales. Von dieser Durchgangsbohrung gehen Querkanäle 61 ab, die beim linken Ausführungsbeispiel in die Durchtrittsöffnung 49 münden und bei dem rechten Ausführungsbeispiel in den Kanalabschnitt 56. Unterhalb der Querkanäle verschließt ein federbelastetes Rückschlagventil 62 die Durchgangsbohrung, die in diesem Abschnitt die Funktion eines Nebenarms des Bypass-Kanals darstellt.

Ein Durchflußkanal 18 durchzieht in senkrechter Richtung den Dämpferkolben 7 und erweitert sich an der Oberseite zu einer größeren Aufnahmeöffnung. Der Durchflußkanal 18 ist nur in der linken Ausführung sichtbar; er ist aber entsprechenderweise auch in der rechten Ausführung vorgesehen. Das untere Ende des Durchflußkanales 18 verschließt links das innere Bauteil 47 mit seinem Radialflansch, rechts (und nicht erkennbar) das äußere Bauteil 52. Schließlich ist im Dämpferkolben 7 rechts noch eine schrägverlaufende Rückflußleitung 63 erkennbar, die wiederum in gleicher Weise auch links vorgesehen ist. Die Rückflußleitung 63 öffnet sich nach unten und ist an ihrem oberen Ende durch ein herkömmliches federbelastetes Plattenventil verschlossen.

In der Zugstufe fließt Dämpfungsflüssigkeit durch den Durchflußkanal 18 und beaufschlagt im linken Ausführungsbeispiel das äußere Bauteil 47. Da aber das innere Bauteil 48 von unten an das äußere Bauteil 47 anstößt, muß der Druck in der Dämpfungsflüssigkeit so weit ansteigen, daß die Kraft beider Druckfedern 50 und 51 überwunden werden können. Bezüglich der Druckfedern 50, 51 handelt es sich hier demnach um eine Parallelschaltung. Hat der Drehschieber 45 geöffnet, fließt zusätzlich Dämpfungsflüssigkeit durch den Bypass-Kanal und beaufschlagt durch die Durchtrittsöffnung 49 das innere Bauteil 48. Die Parallelschaltung ist damit aufgehoben und bei entsprechender Dimensionierung der Druckfeder 51 gibt das Bauteil 48 schon bei verhältnismäßig geringen Drücken den Durchfluß durch den Bypass-Kanal frei.

Beim rechten Ausführungsbeispiel drückt bei geschlossenem Axialschieber die Dämpfungsflüssigkeit über den (hier nicht sichtbaren) Kanal 18 auf das äußere Bauteil 52. Bei geöffnetem Axialschieber 46 drückt die Dämpfungsflüssigkeit über den Bypass-Kanal zusätzlich auf das innere Bauteil 54, das wiederum über die Druckfeder 55 die Kraft an das äußere Bauteil 52 weitergibt. Hier liegt eine Serienschaltung der beiden Druckfedern 55 und 53 vor.

Die beiden Ausführungsbeispiele nach Fig. 4 erlauben aber auch eine Steuerung in der Druckstufe. Verschließt der Drehschieber 45 bzw. Axialschieber 46 den Bypass-Kanal, erfolgt der Flüssigkeitsaustausch in dieser Stufe über den Kanal 63. Bei geöffnetem Bypass-Kanal fließt jedoch zusätzlich Dämpfungsflüssigkeit durch die Durchgangsbohrung 60 über das Rückschlagventil 62 des Endstückes 59 in die obere Arbeitskammer. In diesem Fall erhält der Stoßdämpfer eine weichere Kennung.

Die Fig. 5 zeigt einen Axialschieber 64, der als Stufenkolben ausgebildet und mit einem Ringbund 65 in einer hohlen Kolbenstange 66 eines Stoßdämpfers 67 geführt ist. Über das untere Ende der Kolbenstange 66 ist ein Dämpfungskolben 7 geschoben und dort befestigt. Der Dämpfungskolben 7 weist lediglich einen Rückflußkanal 68 auf, ansonsten ist das gesamte Ventilsystem innerhalb der Kolbenstange 66 angeordnet. Dadurch ergibt sich ein kompakter Aufbau.

In der Kolbenstange 66 ist ein mit Durchflußkanälen 69, 70, 71 versehenes Mittelstück 72 unterhalb des Axialschiebers 64 befestigt. Gegen die Unterseite dieses Mittelstücks 72 drückt eine Schraubenfeder 73 einen hutförmiger Schließkörper 74, der dadurch den Durchflußkanal 69 verschließt. Innerhalb des hutförmigen Schließkörpers 74 ist axial verschiebbar ein Verschlußstopfen 75 angeordnet, der über eine sich am Boden des hutförmigen Schließkörpers 74 abstützende Druckfeder 76 gegen die Unterseite des Mittelstücks 72 gepreßt wird un dabei im wesentlichen die Durchflußkanäle 70 und 71 verschließt.

Der Axialschieber 64 weist an seinem unteren Ende einen dornförmigen Fortsatz 77 auf, der in den Durchflußkanal 71 einzutauchen und ihn zu verschließen vermag. Ein Absatz 78 oberhalb des Fortsatzes 77 ermöglicht es dem Axialschieber 64 bei genügender Eintauchtiefe, die Durchflußkanäle 70 zu verschließen.

Durch diesen Aufbau läßt der Stoßdämpfer 67 in der Zugstufe 3 verschiedene Härteeinstellungen zu. Bei der härtesten Stufe ist der Axialschieber 64 voll eingefahren. Er verschließt damit den Durchflußkanal 71, die Durchflußkanäle 70 und mit seinem Ringbund 65 die Querbohrungen 12 in der Wand der Kolbenstange 66. Die Dämpfungsflüssigkeit kann lediglich durch die Kanäle 69 unter Überwindung der Federkraft 73 in die andere Arbeitskammer fließen.

In der zweiten Stellung, das ist die Stellung nach Fig. 5, gibt der Ringbund 65 die Durchtrittsöffnungen 12 und der Absatz 78 die Durchflußkanäle 70 frei. Nun kann zusätzlich Dämpfungsflüssigkeit über die Durchflußkanäle 70 fließen, die einerseits den hutförmigen Schließkörper 74 und andererseits den Verschlußstopfen 75 beaufschlagen.

In der dritten, weichsten Stufe, ist der Axialschieber 64 nach oben gefahren und gibt damit auch noch den Durchflußkanal 71 frei. Die durchströmende Dämpfungsflüssigkeit erhält so eine größere wirksame Druckfläche am Verschlußstopfen 75 gegenüber der zweiten Einstellung, und vermag ihn dadurch schon bei niedrigen Drücken zu bewegen.

Die prinzipielle Wirkungsweise bzw. die möglichen Verstellbereiche der beschriebenen Ausführungsbeispiele sollen nun noch einmal anhand der in Fig. 1 dargestellten Kennlinien aufgezeigt werden. Bei dem in dieser Figur dargestellten Diagramm ist auf der Abszisse 83 die Kolbengeschwindigkeit aufgetragen und auf der Ordinate 84 die Dämpfungskraft. Die Kurve d zeigt die Verhältnisse, wenn beispielsweise in Fig. 3 der Bypass-Kanal geschlossen und der Konstantdurchfluß 43 nicht vorhanden wäre, so daß (ohne Leckverluste) Dämpfungsflüssigkeit nur durch den Durchflußkanal 18 strömen kann. Es zeigt sich, daß die Dämpfkraft bis zu einem besimmten Wert, hier mit 79 bezeichnet, ansteigen muß, bevor das Sitzventil 40 öffnet. Unterhalb dieses Wertes ist wegen der Inkompressibilität der Dämpfungsflüssigkeit eine Bewegung des Dämpfungskolbens nicht möglich. Das heißt, geringe Kräfte die auf den Schwingungsdämpfer wirken, werden nicht abgebaut. Das führt zu Komforteinbußen.

Die Kurve b zeigt die Verhältnisse, wenn die Steuerhülse 11 nach Fig. 3 den Bypass-Kanal freigibt. Die Ansprechstufe liegt hier wesentlich tiefer und ist mit 80 bezeichnet. Durch die vorgestellten konstruktiven Variationsmöglichkeiten, die durch die getrennte Führung des Durchflußkanales und des Bypass-Kanales möglich sind läßt sich die Verschiebung der Kurve b in einem weiten Bereich vornehmen.

Die Kurve c gibt die Verhältnisse wieder, wenn beispielsweise die Ausführung nach Fig. 5 mit dem Konstantdurchfluß 43 versehen ist. Hier zeigt sich, daß bereits von Anfang an Dämpfungsflüssigkeit zwischen den einzelnen Arbeitskammern in der jeweiligen Stufe, Druck- oder Zugstufe, pulsieren kann. Der Dämpfungskolben verschiebt sich schon bei geringen, auf ihn einwirkenden Kräften, die z. B. aus den Wankbewegungen des Fahrzeugaufbaus herrühren. Es wird auf diese Weise eine Verbesserung des Komforts im Bereich unterhalb der Linie d oder b erreicht. Mit steigender Kolbengeschwindigkeit erhöht sich aber der Durchflußwiderstand der Dämpfungsflüssigkeit durch diesen Konstantdurchfluß 43 exponentiell. Ab dem Punkt 81 öffnet dann das Sitzventil 40 und der Verlauf wird im wesentlichen durch die Kurve d bestimmt.

Ist der Bypass-Kanal in Fig. 3 geöffnet, kommt neben den Konstantdurchfluß 43 noch der Konstantdurchfluß 44 hinzu. Dadurch wird die Kennlinie c weicher und es ergibt sich ein Verlauf wie er mit der Kurve e dargestellt ist. Das Sitzventil öffnet sich bei dieser Einstellung im Punkt 82. Da auch hier wiederum bei den einzelnen beschriebenen Ausführungsbeispielen für die Konstantdurchflüsse eine große Freiheit an Gestaltungsmöglichkeiten gegeben ist, läßt sich auch der Verlauf der Kurve in einem weiten Bereich variieren.

## Patentansprüche

1. Ventilsystem für steuerbare, hydraulische Schwingungsdämpfer, insbesondere für Teleskopstoßdämpfer, das den Austausch von Dämpfungsflüssigkeit zwischen einer ersten und zweiten Arbeitskammer des Schwingungsdämpfers ermöglicht, mit wenigstens einem federbelasteten Sitzventil, auf dessen Verschlußorgan mindestens ein offener Durchflußkanal (18) und ein mit einem Schieberventil (46) verschließbarer Bypass-Kanal führt, dadurch gekennzeichnet, daß im Ventilsystem der Bypass-Kanal auf seiner ganzen Länge getrennt vom Durchflußkanal geführt ist und daß das Verschlußorgan des Sitzventils aus zwei ineinander angeordneten, topfförmigen Bauteilen (47, 48; 52, 54) besteht, die teleskopartig gegeneinander verschiebbar sind, und daß das eine Bauteil (47, 52) den Durchflußkanal (18) und das andere Bauteil (48, 54) den Bypass-Kanal verschließt.

2. Ventilsystem nach Anspruch 1, dadurch gekennzeichnet, daß jedes topfförmige Bauteil (47, 48; 52, 54) durch eine eigene Druckfeder (50, 51; 53, 55) beaufschlagt ist.

3. Ventilsystem nach Anspruch 2, dadurch gekennzeichnet, daß die Druckfedern (50, 51; 53, 55) unterschiedliche Federraten aufweisen.

4. Ventilsystem nach Anspruch 2 oder 3, dadurch gekennzeichnet, daß das innere und den Bypass-Kanal verschließende, topfförmige Bauteil (54) über seine Druckfeder (55) am äußeren topfförmigen Bauteil (52) abstützt.

5. Ventilsystem nach einem der Ansprüche 1 bis 4, dadurch gekennzeichnet, daß im Bypass-Kanal ein den Durchfluß zum Verschlußorgan freigebendes Rückschlagventil (62) angeordnet ist, das bei umgekehrter Flußrichtung der Dämpfungsflüssigkeit einen das Verschlußorgan umgehenden Nebenkanal öffnet.

6. Ventilsystem für steuerbare, hydraulische Schwingungsdämpfer, insbesondere für Teleskopstoßdämpfer, das den Austausch von Dämpfungsflüssigkeit zwischen einer ersten und zweiten Arbeitskammer des Schwingungsdämpfers ermöglicht, mit wenigstens einem federbelasteten Sitzventil, auf dessen Verschlußorgan (73–76) mindestens ein offener Durchflußkanal (69) und ein mit einem Schieberventil verschließbarer Bypass-Kanal (71) führt, dadurch gekennzeichnet, daß im Ventilsystem der Bypass-Kanal auf seiner ganzen Länge getrennt vom Durchflußkanal geführt ist und daß das Verschlußorgan (73–76) innerhalb des Dämpferkolbens angeordnet ist.

7. Ventilsystem nach Anspruch 6, dadurch gekennzeichnet, daß das Verschlußorgan aus einem federbelasteten, hutförmigen, den Durchflußkanal überdeckenden Schließkörper (74) besteht, in dem ein axial verschiebbarer, mit der Mündung des Bypass-Kanals zusammenarbeitender Verschlußstopfen (75) gehalten ist, der sich über eine Druckfeder (76) am hutförmigen Schließkörper (74) abstützt.

8. Ventilsystem nach Anspruch 7, dadurch gekennzeichnet, daß wenigstens zwei Bypass-Kanäle (70, 71) vorgesehen sind, die ein in der Kolbenstange (66) geführter Stufenkolben (64) entsprechend seiner axialen Stellung verschließt.

9. Ventilsystem für steuerbare, hydraulische Schwingungsdämpfer, insbesondere für Teleskop- stoßdämpfer, das den Austausch von Dämpfungsflüssigkeit zwischen einer ersten und zweiten Arbeitskammer des Schwingungsdämpfers ermöglicht, mit wenigstens einem federbelasteten Sitzventil, auf dessen Verschlußorgan mindestens ein offener Durchflußkanal (18) und ein mit einem Schieberventil verschließbarer Bypass-Kanal führt und bei dem das Verschlußorgan aus einem mittig geführten, durch eine Schraubenfeder (42) im Schließzustand gehaltenen Bauelement (41) besteht, dadurch gekennzeichnet, daß im Ventilsystem der Bypass-Kanal auf seiner ganzen Länge getrennt vom Durchflußkanal geführt ist und daß die Schraubenfeder (42) außermittig angeordnet ist.

10. Ventilsystem nach einem der Ansprüche 1 bis 9, dadurch gekennzeichnet, daß das Verschlußorgan im geschlossenen Zustand für den Durchfluß- und/oder Bypass-Kanal eine konstante Austrittsöffnung (43, 44) freiläßt.

**Claims**

1. A valve system for controllable hydraulic vibration dampers, more particularly for telescopic shockabsorbers for transferring fluid between a first and a second working chamber in the vibration damper, comprising at least one spring-loaded seat valve having a closure means to which at least one open flow duct (18) and a closable bypass duct connected to a slide valve (46) lead. characterised in that, in the valve system, the bypass duct is guided separately from the flow duct over its entire length and that the closure means of the seat valve comprises two pot-like components (47, 48; 52, 54) disposed inside one another and telescopable, and one component (47, 52) closes the flow duct (18) and the other component (48, 54) closes the bypass duct.

2. A valve system according to claim 1, characterised in that each pot-like component (47, 48; 52, 54) is acted upon by a separate pressure spring (50, 51; 53, 55).

3. A valve system according to claim 2, characterised in that the pressure springs (50, 51; 53, 55) have different spring characteristics.

4. A valve system according to claim 2 or 3, characerised in that the inner pot-like component (54) closing the bypass duct bears, via a pressure spring (55), against the outer pot-like component (52).

5. A valve system according to any of claims 1–4, characterised in that a non-return valve (62) unblocking the flow to the closure means is disposed in the bypass and, when the direction of flow of the damping fluid is reversed, opens a branch duct bypassing the closure means.

6. A valve system for adjustable hydraulic vibration dampers, more particularly for telescopic shock-absorbers, for transferring damping fluid between a first and a second working chamber of the vibration damper, comprising at least one spring-loaded seat valve having a closure means (73–76) to which at least one open flow duct (69) and a bypass duct (71) closable by a slide valve lead, characterised in that, in the valve system, the bypass duct is guided separately from the flow duct along its entire length and the closure means (73–76) is disposed inside the damping piston.

7. A valve system according to claim 6, characterised in that the closure means comprises a spring-loaded hat-shaped closure member (74) covering the flow duct and holding an axially-movable closure plug (75) which cooperates with the valve of the bypass duct and bears against the hat-shaped closure member (74) via a pressure spring (76).

8. A valve system according to claim 7, characterised in that at least two bypass ducts (70, 71) are provided which close a stepped piston (64) guided in the piston rod (66), depending on the axial position of the pistons.

9. A valve system for adjustable hydraulic vibration dampers, more particularly for telescopic shockabsorbers, for transferring damping fluid between a first and a second working chamber of the vibration damper, comprising at least one spring-loaded seat valve having a closure means to which at least one open flow duct (18) and a bypass duct closable by a slide valve lead, and where the closure means comprise a centrally guided structural component held in the closed position by a helical spring (42), characterised in that, in the valve system, the bypas duct is guided separately from the flow duct along its entire length and the helical spring (42) is disposed eccentrically.

10. A valve system according to any of claims 1 to 9, characterised in that, when the closure means is in the closed state, it unlocks a constant outlet opening (43, 44) for the flow duct and/or the bypass duct.

**Revendications**

1. Système à clapets pour amortisseur hydraulique réglable, notamment pour amortisseur télescopique qui permet le passage de liquide amortisseur entre une première et une deuxième chambre de travail de l'amortisseur, avec au moins une soupape à siège chargée par un ressort, dont l'organe de fermeture porte au moins un canal d'écoulement libre (18) et un canal by-pass pouvant être obturé par un coulisseau axial (46), caractérisé en ce que, dans le système de clapets, le canal by-pass est réalisé indépendamment du canal d'écoulement et que l'organe de fermeture de la soupape à siège est constitué de deux pièces en tronc de cône adaptées l'une à l'autre (47, 48; 52, 54) qui coulissent télescopiquement l'une par rapport à l'autre et en ce qu'une pièce (47, 52) obture le canal d'écoulement (18) et que l'autre pièce (48, 54) obture le canal by-pass.

2. Système à clapets selon la revendication 1, caractérisé en ce que chaque pièce en forme de tronc de cône (47, 48; 52, 54) est chargée par son propre ressort de compression (50, 51; 53, 55).

3. Système à clapets selon la revendication 2, caractérisé en ce que les ressorts de compression (50, 51; 53, 55) présentent des forces différentes.

4. Système à clapets selon l'une quelconque des revendications 2 ou 3, caractérisé en ce que la pièce (54) interne en tronc de cône fermant le canal by- pass s'appuie par son ressort de compression (55) sur la pièce externe en tronc de cône (52).

5. Système à clapets selon l'une quelconque des revendications 1 à 4, caractérisé en ce que, dans le canal by-pass, est placé un clapet de non retour (62) libérant le passage vers l'organe de fermeture, qui, dans le sens d'écoulement inverse du liquide amortisseur ouvre un canal secondaire évitant l'organe de fermeture.

6. Système à clapets pour amortisseur hydraulique réglable notamment pour amortisseur télescopique qui permet le passage de liquide amortisseur entre une première et une deuxième chambre de travail de l'amortisseur, avec au moins une soupape à siège chargée par un ressort sur l'organe de fermeture duquel (43–76) il y a au moins un canal d'écoulement libre (69) et un canal by-pass (7) pouvant être obturé par un coulisseau axial, caractérisé en ce que dans le système à clapets, le canal by-pass est réalisé sur toute sa longueur indépendamment du canal d'écoulement et que l'organe de fermeture (73-76) est disposé à l'intérieur du piston d'amortisseur.

7. Système à clapets selon la revendication 6, caractérisé en ce que l'organe de fermeture est constitué d'un clapet (74) en forme de chapeau, chargé par un ressort recouvrant le canal d'écoulement dans lequel est maintenu un bouchon de fermeture (75) coopérant avec l'orifice du canal by-pass, qui s'appuie via un ressort de compression (76) sur le clapet (74) en forme de chapeau.

8. Système à clapets selon la revendication 7, caractérisé en ce qu'au moins deux canaux by-pass (70, 71) sont prévus, obturés par un piston à étages (64) guidé dans la tige de piston (66) en fonction de sa position axiale.

9. Système à clapets pour amortisseur hydraulique réglable, notamment pour amortisseur télescopique, qui permet le passage de liquide amortisseur entre une première et une deuxième chambre de travail, avec au moins une soupape à siège chargée par un ressort, dont l'organe de fermeture porte au moins un canal d'écoulement libre (18) et un canal by-pass pouvant être obturé par un coulisseau axial et dans lequel l'organe de fermeture est constitué d'un élément (41) maintenu fermé par un ressort de compression (42), caractérisé en ce que dans le système à clapets, le canal by-pass est réalisé sur toute sa longueur indépendamment du canal d'écoulement et que le ressort de compression (42) est excentré.

10. Système à clapets selon l'une quelconque des revendications 1 à 9, caractérisé en ce que l'organe de fermeture à l'état fermé libère une ouverture d'écoulement constante (43, 44).

_Fig.1_

EP 0 207 409 B1

_Fig.2_

*Fig. 3*

*Fig. 4*

*Fig. 5*